# EUROPÄISCHE PATENTSCHRIFT

(11) **EP 2 569 548 B1**
(45) Veröffentlichungstag und Bekanntmachung des Hinweises auf die Patenterteilung: **29.10.2014**
(21) Anmeldenummer: 12718271.5
(22) Anmeldetag: 07.05.2012
(51) Int. Cl.: F16B 21/16

(54) **BOLZEN UND SPANNSYSTEM MIT BOLZEN**
LOCK BOLT AND CLAMPING SYSTEM
BOULON DE BLOCAGE ET SYSTÈME DE SERRAGE

(30) Priorität: 10.05.2011 DE 102011101096
(43) Veröffentlichungstag der Anmeldung: 20.03.2013
(73) Patentinhaber: Demmeler, Ludwig, 87737 Boos (DE)
(72) Erfinder: Demmeler, Ludwig, 87737 Boos (DE)
(74) Vertreter: MERH-IP Matias Erny Reichl Hoffmann
(86) Internationale Anmeldenummer: PCT/EP2012/058371
(87) Internationale Veröffentlichungsnummer: WO 2012/152755

(56) Entgegenhaltungen:
- DE-A1- 19 917 209
- DE-A1-102008 064 052
- DE-C1- 19 734 866

## Beschreibung

Die Erfindung betrifft einen Bolzen zum lösbaren Verbinden zweier mit wenigstens einer Durchgangsbohrung versehener Bauteile. Die Erfindung betrifft weiterhin ein Spannsystem, um mit Durchgangsbohrungen versehende Gegenstände lösbar, schnell und sicher miteinander zu verbinden. Ein weiterer Aspekt der Erfindung betrifft ein Verfahren zum Verriegeln und Entriegeln eines Spannbolzens mit einem Werkzeug zur Drehmomentübertragung.

Derartige Bolzen sind aus dem Stand der Technik bekannt. Beispielsweise offenbaren die EP 0 647496 A2 und die DE 20104105 U1 einen derartigen Bolzen. Derartige Bolzen haben sich als flexibles, lösbares Spannmittel bewährt und haben insbesondere den Vorteil, dass der auf Kugeln und radiale Bohrungen basierende Spannmechanismus gut zu fertigen ist. Mittels derartiger Bolzen können hohe Spann- und Zugkräfte umgesetzt werden. Es wurde jedoch festgestellt, dass diese Spann- und Zugkräfte an Bauteilen, die über einen längeren Zeitraum wiederholt mit diesen Bolzen gespannt werden, Materialverformungen, insbesondere an den Durchgangsbohrungen zur Aufnahme der Bolzen und Spannrohre, hinterlassen und unbrauchbar machen.

Es ist daher eine Aufgabe der vorliegenden Erfindung, die aus dem Stand der Technik bekannten Spannbolzen weiterzubilden, um derartige Materialverformungen zu reduzieren bzw. zu vermeiden.

Diese Aufgabe wird durch einen Bolzen gemäß den Merkmalen des Patentanspruchs 1 sowie durch ein Spannsystem gemäß den Merkmalen des Patentanspruchs 10 gelöst. Die abhängigen Patentansprüche betreffen vorteilhafte Ausgestaltungen der Erfindung.

Die Erfindung betrifft einen Bolzen, insbesondere einen Einsteck- oder Spannbolzen zum lösbaren Verbinden und Spannen zweier mit wenigstens einer Durchgangsbohrung versehener Bauteile oder Gegenstände. Erfindungsgemäß umfasst der Bolzen ein Bolzengehäuse, das mit Durchtrittsöffnungen für Klemmmittel versehen ist, die in den Durchtrittsöffnungen des Bolzengehäuses gelagert sind. Die Klemmmittel befinden sich dabei in einem ungespannten Zustand des Bolzens innerhalb des Bolzengehäuses, treten jedoch in einem gespannten Zustand des Bolzens mit einem äußeren Abschnitt aus den Durchtrittsöffnungen heraus. Die Klemmmittel sind mit geringem Spiel in den Durchtrittsöffnungen gelagert, so dass es auch möglich ist, dass die Klemmmittel auch schon im ungespannten Zustand teilweise aus den Durchtrittsöffnungen heraustreten, beispielsweise durch Bewegung des Bolzens. Weiterhin umfasst der Bolzen ein im Inneren des Bolzengehäuses angeordnete, mit Außengewinde versehenes Spannmittel, beispielsweise eine Spindel oder eine Stiftschraube, dessen Außengewinde in ein Innengewinde des Bolzengehäuses eingreift. Hierbei kann ein erster Endbereich des Spannmittels aus dem Bolzengehäuse herausragen und dort vorzugsweise drehfest mit einem Handgriff versehen sein. Der Endbereich des Spannmittels kann sich aber auch im Bolzengehäuse befinden, beispielsweise in Form einer Stiftschraube, die mit einem Innensechskantschlüssel gespannt werden kann. Die Klemmmittel werden beim Hereindrehen des Spannmittels in das Bolzengehäuse in radialer Richtung aus dem Bolzengehäuse herausgedrückt und legen sich dank geringem Führungsspiels vorzugsweise exakt an die Gegenfläche an.

Zum lösbaren Verbinden und Spannen zweier mit wenigstens einer Durchgangsbohrung versehener Bauteile oder Gegenstände kann der Bolzen dann einfach in zwei hintereinander zur Deckung gebrachte zylindrisch oder langlochförmig ausgebildete Durchtrittsbohrungen dieser Bauteile eingesteckt werden. Durch Verdrehen des Spannmittels, beispielsweise der Spindel oder des Spindelhandgriffs werden die Klemmmittel herausgedrückt und hinter der Durchtrittsbohrung des unteren Bauteils verhakt. Der Spindelhandgriff wird dabei durch die Gewindespindel gegen das ihm zugekehrte Bauteil gezogen und beide Bauteile werden miteinander verspannt, wodurch eine sehr feste, absolut formschlüssige Spanneinrichtung geschaffen ist.

Im Gegensatz zu dem aus dem Stand der Technik bekannten Bolzen sind die Klemmmittel nicht als Kugeln, sondern als Schiebeelemente ausgebildet, die mit der Außenkontur zum Gegenstück einen flächigen Formschluss bilden. Im Falle einer angephasten Durchgangsbohrung, d.h. einer Durchgangsbohrung mit einem Mantelflächensegment einer kegelstumpfförmigen Senkung, weist hierfür der äußere Abschnitt eines Schiebeelements eine Stützfläche in Form eines Mantelflächensegments eines Kegelstumpfes auf. Damit kann der äußere Abschnitt des Schiebeelements mit einem Mantelflächensegment einer kegelstumpfförmigen Senkung einen flächigen Formschluss bilden. Ein Mantelflächensegment in Sinne dieser Erfindung kann eine beliebige Teilfläche einer Mantelfläche eines Kegelstumpfes sein. Vorzugsweise sind die obere und untere Kante der Stützfläche als parallele Kreisbogensegmente ausgebildet. Dies entspricht der Projektion eines Trapezes auf die Mantelfläche eines kegelstumpfes. Die Stützfläche kann aber beliebig als Teilfläche eines Kegelmantels geformt sein, auch mit nicht parallelen Kanten, so dass sie einen flächigen Formschluss mit einer angephasten Bohrung, d.h. einer kegelstumpfförmigen Senkung, ausbilden kann.

Alternativ kann der äußere Abschnitt eines Schiebeelements -eine ringförmige Stützfläche aufweisen, falls der Bolzen bei Durchgangsbohrung, die nicht angephast sind, eingesetzt werden soll.

Die aus dem Stand der Technik bekannten Kugeln als Klemmmittel weisen jeweils einen nur punkt- bzw. linienförmigen Kontakt mit einem Mantelflächensegment einer derartigen Senkung auf. Dagegen ermöglicht ein flächiger Formschluss einer Stützfläche des Schiebeelements mit einer derartigen Senkung eine wiederum wesentlich vorteilhaftere Kraftverteilung, um dadurch die Materialverformungen zu vermeiden bzw. auszuschließen.

Vorzugsweise sind die erfindungsgemäßen Schiebeelemente im ungespannten Zustand verdrehsicher und mit leichtem Spiel in den Durchtrittsöffnungen gelagert. Im Unterschied zu den aus dem Stand der Technik bekannten nicht verdrehsicher gelagerten kugelförmigen Klemmmitteln hat dies den Vorteil, dass eine Krafteinleitung über die Stützfläche eine vorteilhafte Verspannung des Schiebeelements und damit ein Verkantmoment bewirkt. Der vorgenannte äußere Abschnitt des Schiebeelements bezieht sich auf den im gespannten Zustand des Bolzens aus dem Bolzengehäuse heraustretenden Abschnitt des Schiebeelements bzw. die Flächen, die das Schiebeelement zur Außenseite, d.h. zur Seite der Durchtrittsöffnungen hin begrenzen.

Die erfindungsgemäßen Schiebeelemente ermöglichen einerseits den Vorteil, dass die Spannkraft nicht wie bei kugelförmigen Klemmmitteln an einem einzelnen Punkt bzw. entlang einer einzelnen kreisförmigen Umfangslinie (Tangenten an die Kugeln) angreift. Dadurch werden die hohen auftretenden Spannkräfte gleichmäßiger verteilt. Die resultierende Oberflächenkraft pro Flächeneinheit am zu spannenden Bauteil wird geringer und führt zu einer signifikanten Reduktion von den über einen längeren Benutzungszeitraum auftretenden Verschleißerscheinungen. Anderseits entsteht bei Krafteinleitung über die Kontaktflächen der Schiebeelemente mit dem zu spannenden Bauteil ein vorteilhaftes Verkantmoment, wobei die eingeleitete Kraft größtenteils auf die unteren und oberen Begrenzungsflächen der Schiebeelemente wirkt, und der verbleibende radiale Kraftanteil in Richtung Spindel stark reduziert wird. Die durch das Verkanten des Schiebelements an den unteren und oberen Begrenzungsflächen erzeugte Widerstandskraft wird vorteilhafterweise durch die an den unteren und oberen Begrenzungsflächen entstehenden hohen Reibungskräfte erhöht, während das Schiebeelement mit der Spindel vorzugsweise nur eine Linienberührung ausbildet. Die durch diese Verkantung und den Reibungskräfte an den unteren und oberen Begrenzungsflächen erfolgte Entlastung der mittleren Spindel hat weiterhin den Vorteil, dass aufgrund der geringen Reibung an der mittleren Spindel diese "mit Gefühl" gelöst und gespannt werden kann.

Die Schiebeelemente können einen polygonförmigen Querschnitt ausweisen. Die Querschnittebene ist hierbei durch eine Achse parallel zur Schieberichtung (radial nach außen) und durch die Längsachse der Spindel bzw. des Bolzengehäuses aufgespannt. Die Schiebeelemente, auch Spreizelemente genannt, sind vorzugsweise als konvexer Polygonkörper gebildet, wobei ein Polygonkörper im Sinne dieser Erfindung sowohl von ebenen als auch gekrümmten Flächen begrenzt wird.

Die in den Durchtrittsöffnungen gelagerten Schiebeelemente können eine zur Längsachse des Bolzens senkrechte Bewegung nach außen vollziehen. Alternativ können die Schiebeelemente auch schräg zur Längsachse des Bolzens gelagert sein, so dass diese beim Spannen schräg aus dem Bolzengehäuse heraustreten.

Weiterhin kann das Spannmittel eine Spindel mit einem sich verjüngenden Endbereich sein. Weiterhin kann beim Hereindrehen der Spindel ein sich verjüngender Endbereich der Spindel die Schiebeelemente aus dem Bolzengehäuse herausdrücken.

Alternativ kann eine Kugel im Innern des Bolzengehäuses angrenzend an das Spannmittels gelagert sein, wobei beim Hereindrehen des Spannmittels die Spannkraft des Spannmittels über die Kugel auf die Schiebeelemente übertragen wird. Mit anderen Worten drückt die Spitze des Spannmittels die im unteren Endbereich des Bolzengehäuses gelagerte Kugel beim Spannen des Bolzens nach unten, die wiederum die Schiebeelemente dabei nach außen aus dem Bolzengehäuse herausdrückt. Durch die punktförmigen Angriffspunkte der Kugel können vorteilhafterweise die Reibungskräfte reduziert werden.

Vorzugsweise bildet die schräg verlaufende Stützfläche einen Winkel im Bereich von 30° bis 60° mit der Längsachse der Spindel, und weiter vorzugsweise einen Winkel 35° bis 55°, oder weiter vorzugsweise von 40° bis 50°. Dies ermöglicht eine optimale Krafteinleitung und -verteilung an der Stützfläche, was nachfolgend anhand der Figuren noch näher erläutert wird.

Weiterhin kann das Schiebeelement eine äußere, zum Bolzengehäuse schräg verlaufende zweite Außenfläche aufweisen, die im Vergleich zur Stützfläche mit der Längsachse der Spindel einen spitzeren Winkel bildet und flächenmäßig größer als die Stützfläche ist, wodurch die Stützfläche optimal durch die zweite Fläche gestützt ist und eine besonders günstige Kraftverteilung innerhalb des Schiebeelements bewirkt.

Eine optimale selbstausgleichende Belastbarkeit des Bolzens und Stabilität zwischen den Spreizelementen wird erreicht, indem drei Schiebeelemente konzentrisch im Abstand von ca. 120° in drei Polygonbohrungen gelagert sind. Der Bolzen kann jedoch auch mit einer anderen Anzahl von Schiebeelementen realisiert werden, beispielsweise mit zwei gegenüberliegenden Schiebeelementen, oder mit vier oder fünf konzentrisch angeordneten Schiebeelementen.

Weiterhin kann das Bolzengehäuse an seinem Ende, an dem der erste Endbereich der Spindel aus dem Bolzengehäuse herausragt, eine Umlaufkante oder einen Bund aufweisen. Hierbei wird die Länge des Bolzengehäuse vorzugsweise derart gewählt, dass beim Einstecken in die Bohrung mit genormter Tiefe die Umlaufkante die Einstecktiefe des Bolzens derart festlegt, dass ein Spannen sofort möglich ist und der bisher notwendige Leerhub und ein Zurückziehen vermieden wird. Es ist jedoch auch möglich, das Bolzengehäuse ohne derartigen Bund auszubilden.

Weiterhin kann das Bolzengehäuse zwei in Längsrichtung voneinander beabstandete Umfangsnuten aufweisen, in die jeweils ein Gummiring oder ein Stahlsprengring eingelegt ist. Beabstandet angeordnet soll mindestens ein Viertel der Länge des Bolzengehäuses bedeuten. Vorzugsweise sind diese Umfangsnuten sowohl in oberen als auch in einem unteren Abschnitt des Bolzengehäuses angeordnet, beispielsweise kann die obere Umfangsnut mit Gummiring am oberen Drittel des Bolzengehäuses und die untere Umfangsnut mit Gummiring am unteren Drittel des Bolzengehäuses angeordnet sein. Dies ermöglicht eine bessere Zentrierung des Bolzens im Langloch und Drehmomentstütze beim Spannen sowie eine gleichzeitige Schmutzentfernung, beispielsweise von Schweiß-Rußpartikeln, beim Einstecken des Bolzens.

Der erfindungsgemäße Bolzen kann zudem in Verbindung mit Bauteilen bzw. Gegenständen eingesetzt werden, die jeweils mindestens eine kreis- oder langlochförmige genormte Durchtrittsöffnung aufweisen. Beispielsweise kann in eine D28 - Systemdurchgangsböhrung zusätzlich ein M30-Innengewinde eingearbeitet sein. Der Einsatz von Spannbolzen mit kugelförmigen Klemmmitteln ist mit derartigen Durchgangsöffnungen mit integriertem Gewinde nicht möglich, da die punktförmige Krafteinleitung bei der Verwendung von Kugeln zu hohen Spannkräften und Deformationen pro Flächeneinheit führen. Durch die erfindungsgemäßen Klemmmittel, die beispielsweise einen flächigen Formschluss mit einem Mantelflächensegment einer Senkung der Durchgangsbohrungen bilden können, sind die Spannkräfte pro Flächeneinheit signifikant reduziert, so dass eine Materialverformung der Gewindeeinkerbungen am Endbereich der Durchgangsbohrungen zuverlässig vermieden werden kann. Deshalb ist es auch möglich, diffizile Spannaufgaben für Materialien mit geringerer Druckfestigkeit, wie beispielsweise Aluminium oder Polyamide einzusetzen

Diese Erfindung ermöglicht erstmals derartige Systembohrungen in Mehrfachfunktion zu verwenden, nämlich zum wahlweisen Einstecken eines erfindungsgemäßen Spannbolzens oder Spannrohres und zum Eindrehen einer gebräuchlichen Gewindestange. Derartige Spannbolzen und Systembohrungen kommen beispielsweise insbesondere in Verbindung mit Spannsystemen basierend auf einem Arbeitstisch, auch Zuricht- oder Schweißtisch genannt, zum Einsatz, bei denen in der Tischplatte sowie entlang der Tischkanten angeordnete und unmittelbar zur Aufnahme von Spannelementen dienende zylindrische Durchgangsbohrungen eingelassen sind. Wenn nun derartige Durchgangsbohrungen sowohl zur Verwendung mit Spannbolzen, Spannrohren als auch zum Eindrehen von Gewindestangen genutzt werden können, werden die Flexibilität und Einsatzmöglichkeiten derartiger Spannsysteme signifikant erhöht.

Vorzugsweise weist ein derartiges Spannsystem mindestens eine AdapterGewindebuchse zum Verkleinern des Gewindedurchmessers auf, die in das Gewinde der Durchgangsöffnung der Bauteile einschraubbar ist. Damit kann beispielsweise eine D28-Durchgangsbohrung mit eingearbeitetem M30-Gewinde auch über geeignete Adapterbuchsen als M24- der M20-Gewinde etc. verwendet werden. Dies ermöglicht derartige Systembohrungen in Doppelfunktion zu verwenden, nämlich zum wahlweisen Einstecken eines erfindungsgemäßen Spannbolzens und zum Eindrehen einer gebräuchlichen Gewindestange.

Der erfindungsgemäße Bolzen eröffnet dadurch neue Anwendungsfelder, beispielsweise 1. für diverse Spannaufgaben an allgemeinen Werkzeugmaschinen; 2. für die Schwerzerspanung; 3. im Stahlbau mit großer Kräfteeinleitung durch das Vorspannen von einzuschweißenden Teilen (Kompensation); sowie 4. Rückspannung durch Erkalten des Schweißvorganges. Weiterhin wird gleichzeitig eine enorme Zeitersparnis von Arbeitsabläufen ermöglicht.

Weiterhin umfasst die Erfindung ein Verfahren zum Verriegeln und Entriegeln eines Spannbolzens mit einem Werkzeug zur Drehmomentübertragung. Das Verfahren umfasst die folgenden Schritte: Das Positionieren des Werkzeugs am Spannbolzen derart, dass dieses formschlüssig in eine axiale Ausnehmung der Gewindespindel oder eine axiale Ausnehmung eines nach außen herausgeführten Handgriffs oder dergleichen der Gewindespindel eingreift, so dass das Werkzeug ein Drehmoment an die Spindel des Spannbolzens übertragen kann; und das Feststellen oder Lösen des Bolzens durch Übertragen eines Drehmoments durch das Werkzeug. Vorzugsweise ist das Werkzeug elektrisch angetrieben, so dass der Spannbolzen schnell und vorzugsweise im Einhandbetrieb festgestellt bzw. wieder gelöst werden kann. Gemäß einer besonders vorteilhaften Ausführungsform ist das Werkzeug ein Schlagbohrer, so dass schnell ein hohes Drehmoment übertragen werden kann.

Zusammenfassend wird durch die vorliegende Erfindung ein Spannbolzen bereitgestellt, der aufgrund der Schiebeelemente als Klemmmittel mit polygonförmigen Querschnitt bzw. einer äußeren Stützfläche die resultierenden Verschleißspuren und Materialverformungen an den zu spannenden Bauteilen ausschließt. Die erfindungsgemäße Form der Schiebeelemente führt zudem bei Krafteinleitung zu einer Verdrehung und Verspannung der Schiebeelemente und damit zu einem Verkantmoment, das die Spannkraft zu großen Teilen von der Spindelspitze wegleitet, diese dadurch entlastet, und dadurch "mit Gefühl" gelöst und gespannt werden kann. Darüber hinaus ist es aufgrund der besonders vorteilhaften Kräfteverteilung mittels der Schiebeelemente nun möglich, zusätzlich in der Systemdurchgangsbohrung ein Innengewinde einzuarbeiten und dieses mit einem erfindungsgemäßen Spannbolzen zu verwenden, ohne dass die Gewindeeinkerbungen durch die hohen Spannkräfte verformt werden. Die Funktionssicherheit und Lebensdauer wird durch diese neue und einfache Wirkungsweise aller entstehender Kräfte und Momente signifikant verbessert.

Bevorzugte Ausführungsformen der vorliegenden Erfindung werden im Folgenden beispielhaft und exemplarisch unter Bezugnahme auf die beigefügten Zeichnungen näher beschrieben.
- **Fig. 1A-1C**: zeigen eine Vorderansicht, eine Schnittansicht und eine perspektivische Ansicht eines Ausführungsbeispiels der vorliegenden Erfindung;
- **Fig. 2**: zeigt eine Vorderansicht gemäß einem Ausführungsbeispiel der vorliegenden Erfindung im gespannten Zustand zur lösbaren Verbindung zweier Bauteile;
- **Fig. 3A-3C**: zeigen Schnittansichten verschiedener Spannzustände gemäß einem Ausführungsbeispiel der vorliegenden Erfindung;
- **Fig. 4**: illustriert schematisch die vorteilhafte Krafteinleitung in den Schiebeelementen gemäß einem Ausführungsbeispiel der vorliegenden Erfindung;
- **Fig. 5**: illustriert in einer perspektivischen Schnittansicht nochmals verschiedene Spannzustände gemäß einem Ausführungsbeispiel der vorliegenden Erfindung;
- **Fig. 6**: zeigt eine Unteransicht im gespannten Zustand gemäß einem Ausführungsbeispiel der vorliegenden Erfindung;
- **Fig. 7A - 7B**: illustrieren die Verwendung von Adapterbuchsen gemäß einem Ausführungsbeispiel der vorliegenden Erfindung;
- **Fig. 8**: illustriert schematisch ein weiteres Anwendungsbeispiel mit Gewindestange;
- **Fig. 9A-9B**: zeigen Schnittansichten weiterer Ausführungsbeispiele der vorliegenden Erfindung;
- **Fig. 10A-10B**: zeigen Schnittansichten weiterer Ausführungsbeispiele der vorliegenden Erfindung;
- **Fig. 11A-11C**: zeigen Schnittansichten weiterer Ausführungsbeispiele der vorliegenden Erfindung; und
- **Fig. 12A-12B**: zeigen Schnittansichten weiterer Ausführungsbeispiele der vorliegenden Erfindung.

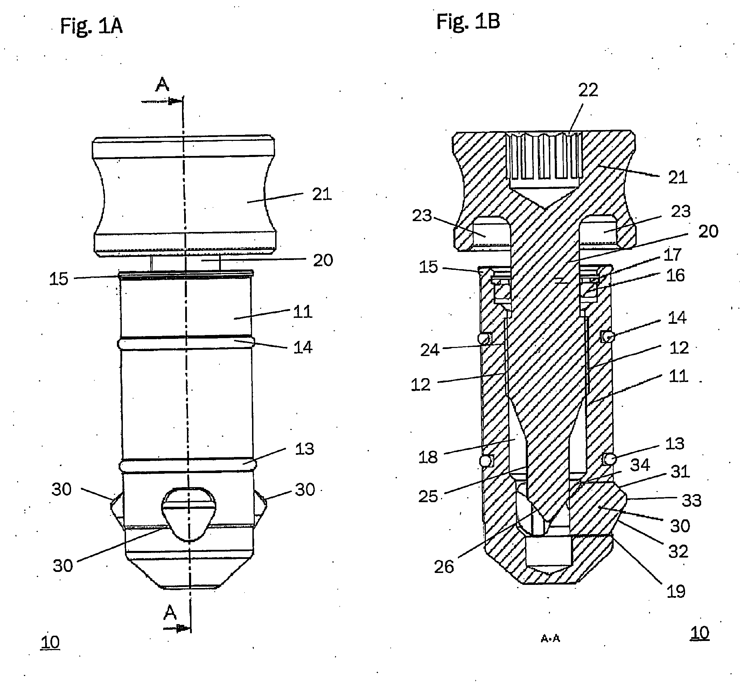

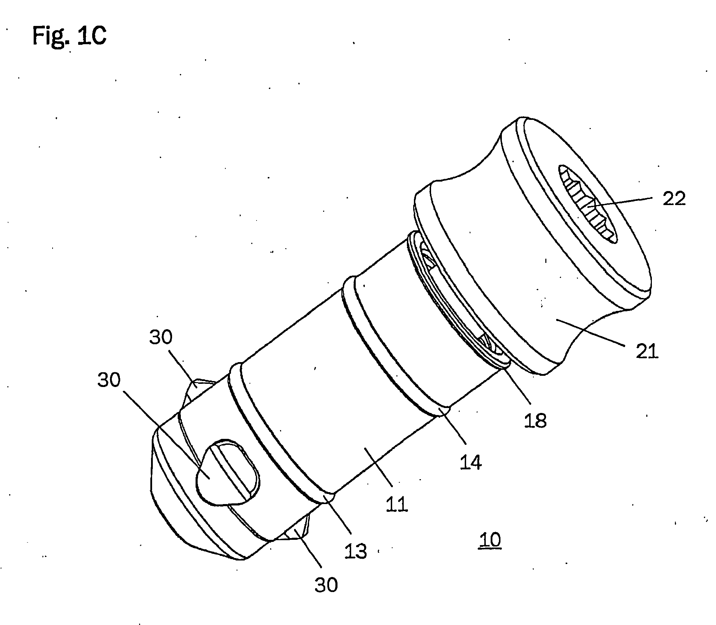

Die Figuren 1A, 1B, und 1C zeigen ein Ausführungsbeispiel des mit 10 bezeichneten Bolzens. Der Bolzen hat ein zylindrisches Bolzengehäuse 11, das hohl ausgebildet und an einer Stirnseite offen ist. Das Bolzengehäuse 11 ist mit drei radialen Polygonbohrungen versehen, in welcher die Schiebeelemente 30 als Klemmmittel eingesetzt sind. Im Inneren des Bolzengehäuses 11 verläuft eine axial verlaufende Gewindespindel 20, welche drehfest mit einem nach außen herausgeführten Handgriff 21 oder dergleichen verbunden ist. Die Umfangsfläche des Handgriffs 21 ist zur Erhöhung der Grifffestigkeit mit einer Riffelung (nicht dargestellt) versehen. Zusätzlich ist der Handgriff 21 mit einer axialen Ausnehmung 22 versehen, die sowohl ein Innengewinde als auch eine Sechskant-Ausnehmung enthält. Dabei durchdringen die Ecken der Sechskant-Ausnehmung das Gewinde, so dass ohne Beeinträchtigung des Gewindes ein Sechskant-Imbusschlüssel in die Ausnehmung eingesteckt werden kann. Durch die Ausnehmung 23 dient der Handgriff 21 gleichzeitig als Aufnahmekappe, die den oberen Bund 15 im gespannten Zustand aufnimmt.

Die Spindel weist ein Außengewinde 24 auf, der in ein Innengewinde 12 des Bolzengehäuses eingreift. Die Spindel 20 weist weiterhin einen sich verjüngenden Endbereich 25 auf, der insbesondere in seinem Endabschnitt nochmals eine zusätzliche dornförmige Verjüngung 26 aufweist, der an den Schiebeelementen 30 angreift und diese beim Spannen des Bolzens 10 radial nach außen schiebt. Der Bolzen 10 weist eine obere und eine untere Umfangsnut auf, in die jeweils ein Gummiring oder Stahlsprengring 13, 14 eingelegt ist. Diese Gummiringe haben eine Doppelfunktion: Zum einen dienen diese Gummiringe 13, 14, insbesondere der untere Gummiring 13, zur Schmutzentfernung, beispielsweise von Schweißruß. Zusätzlich dienen sie als Drehmomentstütze, um eine Verdrehung des Bolzens 10 in einer Durchgangsbohrung bei Betätigung der Spindel 20 zu vermeiden. Am oberen Ende des Bolzengehäuses 11 ist zusätzlich eine Presshülse 16 und ein Sicherungsring 17 angebracht. Beim Zurückdrehen der Spindel 20 legt sich im Extremfall der Außengewindeabschnitt 24 an den als Sicherung dienenden O-Ring 17 an. Nur unter gleichzeitiger Zerstörung dieses O-Rings 17 kann die Spindel, zum Beispiel zum Reinigen des Innenraums des Bolzens, vollständig herausgedreht werden. Alternativ kann der O-Ring 17 auch mittels Seeger-Ringzange zum Reinigen des Bolzens ohne Zerstörung herausgenommen werden.

Die Schnittansicht Fig. 1B zeigt den polygonförmigen Querschnitt des Schiebeelements 30. Das Schiebeelement 30 ist in der Durchtrittsöffnung des Bolzengehäuses 11 mit Spiel gelagert, so dass es im ungespannten Zustand bei Bewegung des Bolzens beweglich ist und vollständig im Bolzengehäuse 11 verschwinden kann. Im Unterschied zu den aus dem Stand der Technik bekannten kugelförmigen Klemmmitteln mit kreisförmigem Querschnitt ist der Querschnitt hier polygonförmig. Hierbei können einzelne Begrenzungsflächen auch leicht gekrümmt sein, wie z.B., die der Spindel zugewandte Begrenzungsfläche 34 im Innenraum. Der polygonförmige Querschnitt im Außenbereich der Schiebeelemente ermöglicht einen flächigen Formschluss mit dem gespannten Bauteil. Das Bolzengehäuse 11 ist an dem unteren Bereich 19 der Durchtrittsöffnungen für die Schiebeelemente 30 angestaucht, um ein Herausfallen der Schiebeelemente zu verhindern. Das Schiebeelement 30 weist in seinem Außenbereich eine zum Bolzengehäuse 11 schräg verlaufende Kontakt- bzw. Stützfläche 31 auf. Unterhalb dieser Kontaktfläche 31 wird das Schiebeelement 30 von einer zweiten schrägen äußeren Fläche begrenzt, die die Kontaktfläche stützt. Dazwischen verläuft ein schmaler Flächenabschnitt 33 parallel zum Bolzengehäuse 11. Den Flächenabschnitt 33 ist als eine flächige Kante (in Form eines Zylindermantelsegments) ausgebildet und bildet zugleich den von der Spindelachse am weitesten entfernten Abschnitt der Schiebeelemente 30. Die obere Stützfläche 34 bildet im gespannten Zustand einen flächigen Formschluss mit dem gespannten Bauteil.

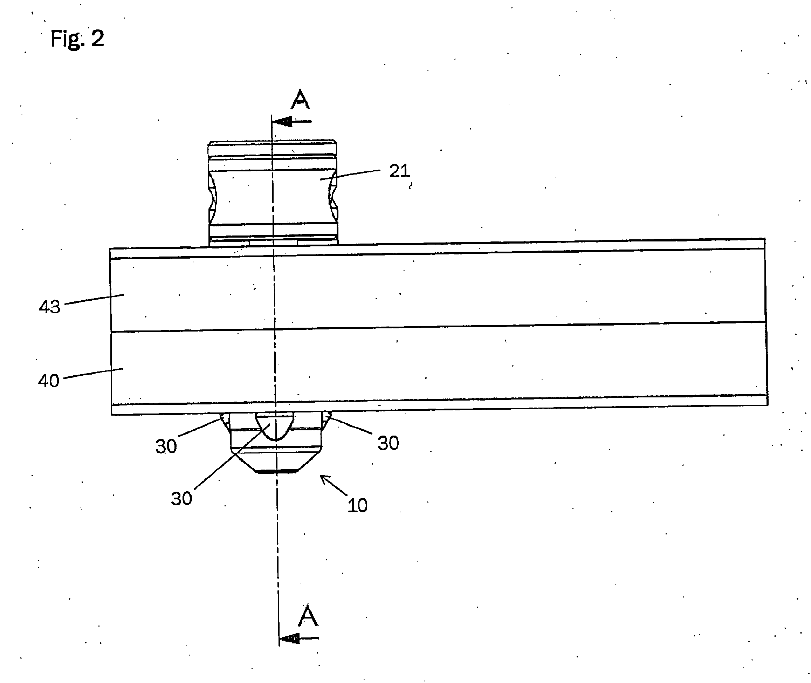

Die Funktionsweise des Bolzens 10 wird nun in den nachfolgenden Figuren näher erläutert. Beispielsweise illustriert Fig. 2 die Verwendung des Bolzens zum lösbaren Verbinden eines mit wenigstens einer Durchgangsbohrung versehenen ersten Bauteils 40 mit einem ebenfalls mit einer Durchgangsbohrung versehenen zweiten Bauteils 43. Der Bolzen wird einfach in zwei hintereinander zur Deckung gebrachte zylindrisch oder langlochförmig ausgebildete Durchgangsbohrungen der Bauteile 40, 43 gesteckt. Durch anschließende Verdrehung des Handgriffs 21 werden die Schiebeelemente 30 aus den Durchtrittsöffnungen herausgedrückt und hinter der Durchgangsbohrung an der Unterseite des zweiten Bauteils 40 verhakt. Der Handgriff 21 wird dabei durch die Gewindespindel gegen das ihm zugekehrte Bauteil gezogen und beide Bauteile 40, 43 werden miteinander verspannt. Der Bund 15 legt beim Einstecken des Bolzens 10 in ein Langloch mit genormter Tiefe die Einstecktiefe des Bolzens 10 derart, dass ein Spannen sofort möglich ist und der bisher notwendige Leerhub und ein Zurückziehen vermieden wird.

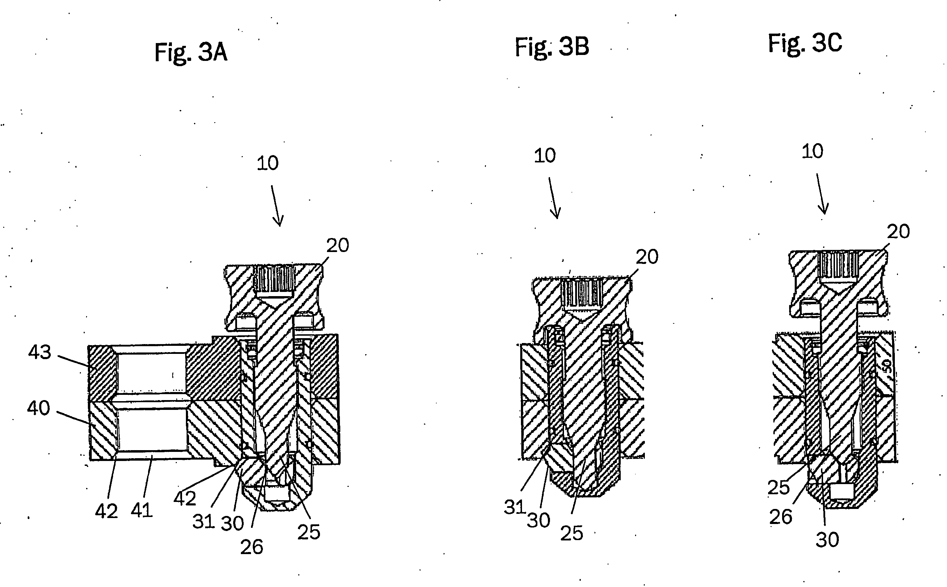

Die verschiedenen Spannzustände sind in den Schnittansichten der Figuren 3A bis 3C schematisch illustriert. Hierbei zeigt Fig. 3C den Bolzen 10 in einer geöffneten Stellung, wobei sich die Spindel 20 in einer herausgedrehten, geöffneten Stellung befindet. In der geöffneten Stellung befindet sich das Schiebeelement 30 innerhalb des Bolzengehäuses 11, da es beim Einführen des Bolzens 10 in die Durchgangsbohrungen der Bauteile 43 bzw. 40 aufgrund der abgeschrägten zweiten Stützfläche 32 in das Gehäuseinnere geschoben wird. In diesem Zustand übt die Spitze 26 des Bolzens noch keine Schiebekraft auf die Schiebeelemente 30 aus.

Durch Verdrehung des Handgriffs 21 der Spindel 20 drückt der untere sich verjüngende Abschnitt 26 der Spindel 20 die Schiebeelemente 30 sukzessive radial nach außen, was in Fig. 3A illustriert ist. Fig. 3B zeigt ein anders Ausführungsbeispiel eines Spannbolzens in einer kleineren Abmessung, bei dem die Spindel 20 in die untere Endstellung gedreht wurde und sich die herausgedrückten Schiebeelemente in der Senkung 42 der unteren Durchgangsbohrung verhakt haben. In dieser Stellung sind die beiden Bauteile 40, 43 miteinander fest verspannt. Die Fläche 31 bildet in dieser Stellung mit einem Mantelflächensegment 42 einer kegelstumpfförmigen Senkung 41 einen flächigen Formschluss. Eine derartige kegelstumpfförmige Senkung 41 mit dem Mantelflächensegment 42 ist zur Verdeutlichung in Fig. 3A anhand der leeren Durchgangsbohrung ohne Bolzen nochmals dargestellt.

Im Folgenden wird ein weiterer Aspekt der Erfindung (nicht in den Figuren dargestellt) beschrieben, der ein Verfahren zum Verriegeln und Entriegeln eines Spannbolzens mit einem Werkzeug zur Drehmomentübertragung betrifft. Gemäß dem Verfahren wird ein Werkzeug zur Drehmomentübertragung benutzt, mittels dem ein Spannbolzen 10 festgestellt bzw. wieder gelöst wird. Hierzu wird ein Werkzeug am Spannbolzen 10 derart positioniert, dass dieses formschlüssig in eine axiale Ausnehmung der Gewindespindel oder eine axiale Ausnehmung eines nach außen herausgeführten Handgriffs 21 oder dergleichen der Gewindespindel 20 eingreift, so dass das Werkzeug ein Drehmoment an die Spindel 20 des Spannbolzens 10 übertragen kann. Im vorliegenden Ausführungsbeispiel ist der Handgriff 21 des Spannbolzens 10 mit einer axialen Ausnehmung 22 versehen, die sowohl ein Innengewinde als auch eine mehrkantige oder eine Torx-Ausnehmung enthält. Nach dem der Schlagbohrer in der Ausnehmung 22 formschlüssig eingreift, kann bei Betätigung des Schlagbohrers ein Drehmoment zum Feststellen oder Lösen des Bolzens übertragen werden. Ein Vorteil dieses Verfahrens ist, das ein Arbeiter eine Vielzahl von Bolzen im Einhandbetrieb schnell und mit hoher Spannkraft feststellen bzw. lösen kann.

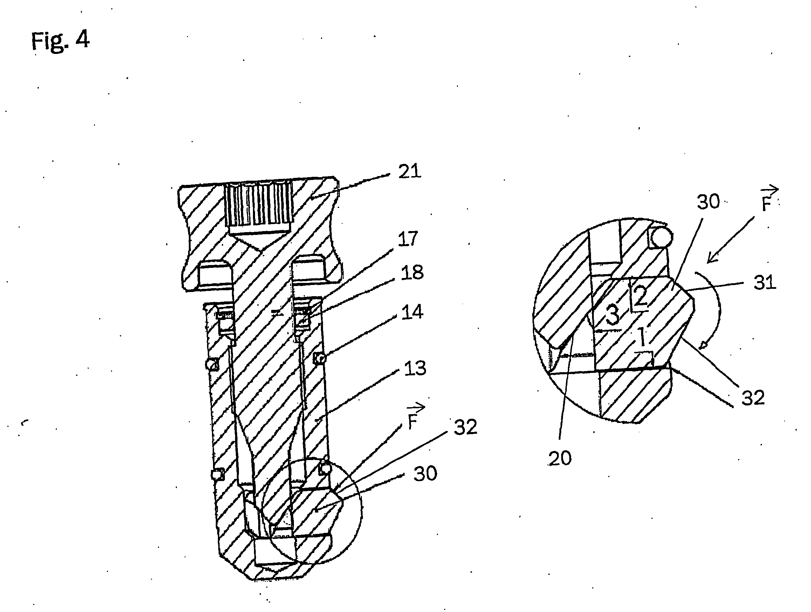

Fig. 4 zeigt nochmals den eingekreisten Bereich des Spannbolzens in einer vergrößerten Darstellung, um die bei Krafteinleitung wirkenden Kräfte besser zu verdeutlichen. Über die Stützfläche 31, die, wie in Fig. 3A dargestellt, mit einem Mantelflächensegment 42 einer kegelstumpfförmigen Senkung 41 einen flächigen Formschluss im gespannten Zustand bildet, wird eine Spannkraft F, als Gegenkraft von dem gespannten Bauteil, eingeleitet. Da die Schiebeelemente mit Spiel in der Durchtrittsöffnung des Bolzengehäuses 11 gelagert sind, entsteht dann bei Krafteinleitung eine leichte Verdrehung und Verspannung des Schiebeelements 30. Dies wiederum bewirkt ein Verkantmoment im gespannten Zustand, das sich sehr positiv auswirkt, weil dadurch die eigentliche Reibungsfläche 3, an der das Schiebeelement mit der vorderen Spitze 26 der Spindel 20 in Verbindung steht, nur gering belastet wird. Bei Krafteinwirkung über die Stützfläche 31 werden die Hauptkräfte auf die unteren und oberen Begrenzungsflächen 1 und 2 des Schiebeelements 30 abgeleitet.

Im vorliegenden Ausführungsbeispiel weist die Stützfläche 31 einen Winkel von ca. 45° zum Bolzengehäuse 11 auf. Dementsprechend erfolgt eine Krafteinleitung über diese Stützfläche 31 auch mit einem Winkel von 45° relativ zur Längsachse des Bolzens 10. Diese eingeleitet Kraft wirkt somit zuerst auf die untere Stützfläche 1, und stützt sich wiederum gegenüber der oberen Begrenzungsfläche 2 ab, da das mit ca. 1/10- Spiel gelagerte Schiebeelement 30 versucht, sich aufgrund der Krafteinleitung zu verdrehen. Dies bewirkt eine Verkantung des Schiebeelements 30 hauptsächlich an den Angriffsflächen 1 und 2. Die verbleibende dritte Kraft in Richtung Zentrum 3, wird dadurch stark reduziert. Unter Einwirkung dieser Restkraft in Richtung Zentrum 3 bewegt sich das Schiebelement in Richtung Zentrum, wo es durch das Spindelende blockiert wird und eine Linienberührung mit der Spindel entsteht. Das Verkanten des Schiebelements 30 an den Stützflächen 1 und 2 erzeugt einen Widerstand. Dieser Widerstand wird vorteilhafterweise durch die an den im Vergleich zur Linienberührung 3 größeren Angriffsflächen 1 und 2 entstehenden hohen Reibungskräfte erhöht. Mit anderen Worten wird durch das Verkantmoment der Kraftfluss derart ausgebildet wird, dass die Hauptspannkräfte an der Ober- und Unterseite 1, 2 des Schiebeelements (Ober- und Unterseite im Sinne von Längsrichtung der Spindel) angreifen, so dass an der Kontaktfläche 3, an der die Spindel 20 beim Antrieb entlang läuft, nur sehr geringe Kräfte wirken. Die durch diese Verkantung erfolgte Entlastung der mittleren Spindel 20 hat weiterhin den Vorteil, dass aufgrund der geringen Reibung an der mittleren Spindel diese "mit Gefühl" gelöst und gespannt werden kann.

Ein derartig vorteilhaftes Verkantmoment entsteht bei kugelförmigen Klemmmitteln nicht, da die eingeleitete Spannkraft fast 1:1 Richtung Zentrum weitergeleitet wird, so dass eine hohe Presskraft auf den inneren Spreizdorn 26 ausgeübt wird.

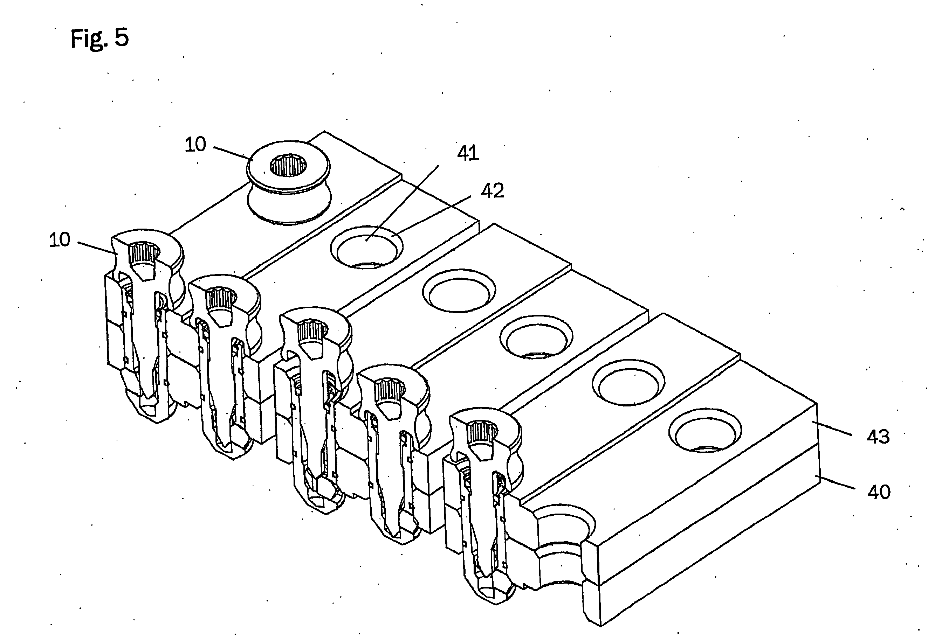

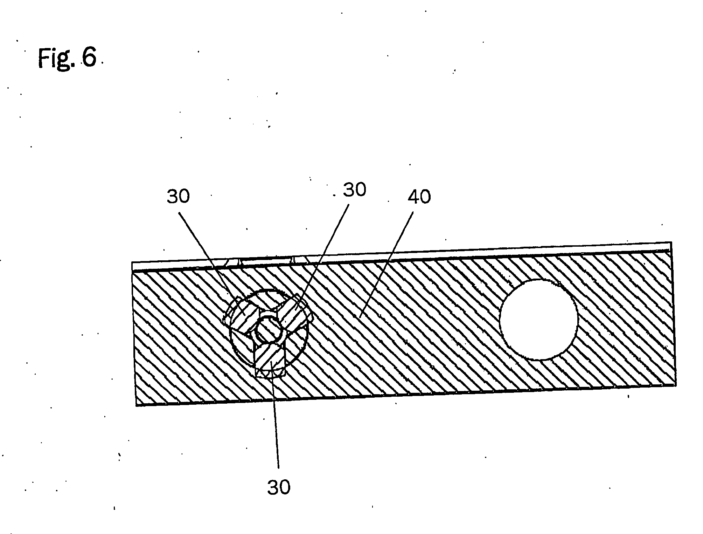

Fig. 5 illustriert nochmals verschiedene Spannzustände des Bolzens 10 in einer perspektivischen Schnittansicht, während Fig. 6 in einer Untersicht darstellt, wie die Schiebeelemente 30 im gespannten Zustand durch die Spindeln aus der Durchtrittsöffnung des Bolzengehäuses 11 herausgedrückt sind und hinter der Durchgangsbohrung verhakt sind.

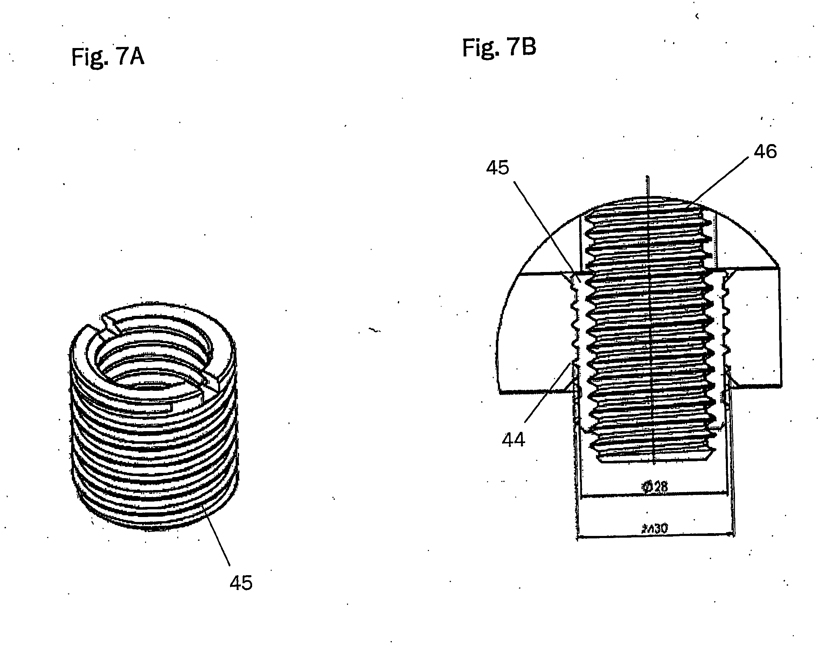

Wie zuvor erwähnt, ermöglicht die besonders vorteilhafte Kraftverteilung aufgrund der Schiebeelemente mit polygonförmigem Querschnitt und einer flächigen Kraftableitung die Verwendung von Innengewinden in den Durchgangsbohrungen. Beispielsweise illustriert Fig. 7B eine gängige D28-Durchgangsbohrung, in die ein M3O-Gewinde 44 eingelassen ist. Durch die Verwendung von zusätzlichen Adapterbuchsen 45 wie in Fig. 7A dargestellt, kann durch Einbringen einer geeigneten Adapterbuchse 45, beispielsweise einer M24-, M20-, M16- oder M12-Adapterbuchse die Durchgangsbohrung für den Klemmbolzen schnell an verschiedene Gewindeanforderungen angepasst werden, in die dann wiederum eine Gewindestange 46 wie in Fig. 7B dargestellt eingeschraubt werden kann.

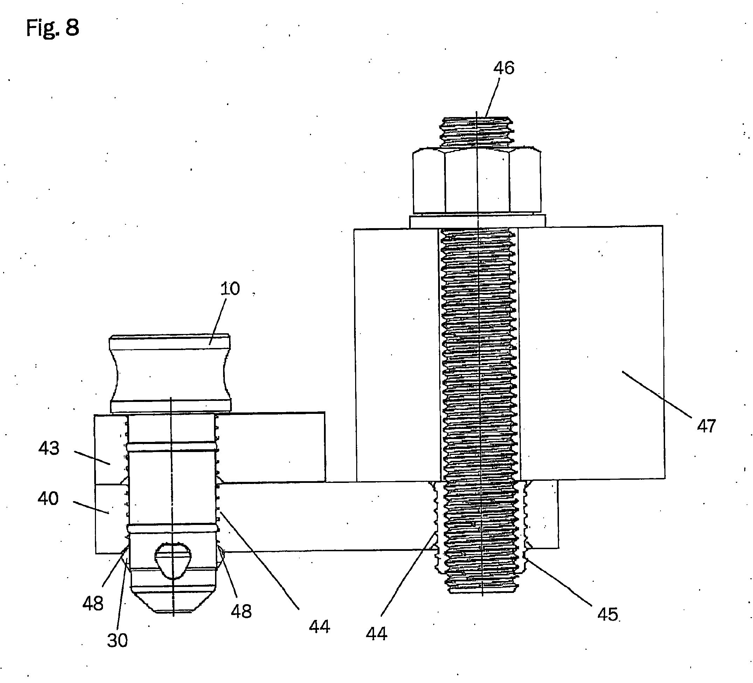

Damit wird die Flexibilität und Einsatzmöglichkeiten derartiger Spannsysteme signifikant erhöht, was beispielhaft in Fig. 8 illustriert ist. Ein erstes Bauteil 40 mit mittels eines Spannbolzens 10 mit einem zweiten Bauteil verspannt und gleichzeitig mit einem dritten Bauteil 47 mittels einer Gewindestange 46. Der Durchmesser der Systembohrung zur Aufnahme der Gewindestange ist mittels einer Adapterbuchse 45, die in das Innengewinde 44 der Systembohrung eingeschraubt ist, an den Durchmesser der Gewindestange 46 angepasst. Die Systembohrungen der Bauteile 40, 43 weisen ebenfalls ein eingearbeitetes Innengewinde 44 auf, so dass anstatt eine Bolzens auch hier die Verwendung einer Gewindestange 46 möglich ist. Die Verwendung von Spannbolzen mit kugelförmigen Klemmmitteln würde zu einer Beschädigung der Einkerbungen des Inngengewindes 44 an den Kontaktstellen 48 der Klemmmittel mit dem Bauteil 40 führen. Aufgrund des flächigen Formschlusses der Schiebeelemente 30 des Bolzens 10 wird die auftretende Spannkraft jedoch ausreichend auf die Stützflächen verteilt, so dass eine Beschädigung des Gewindes 44 vermieden wird.

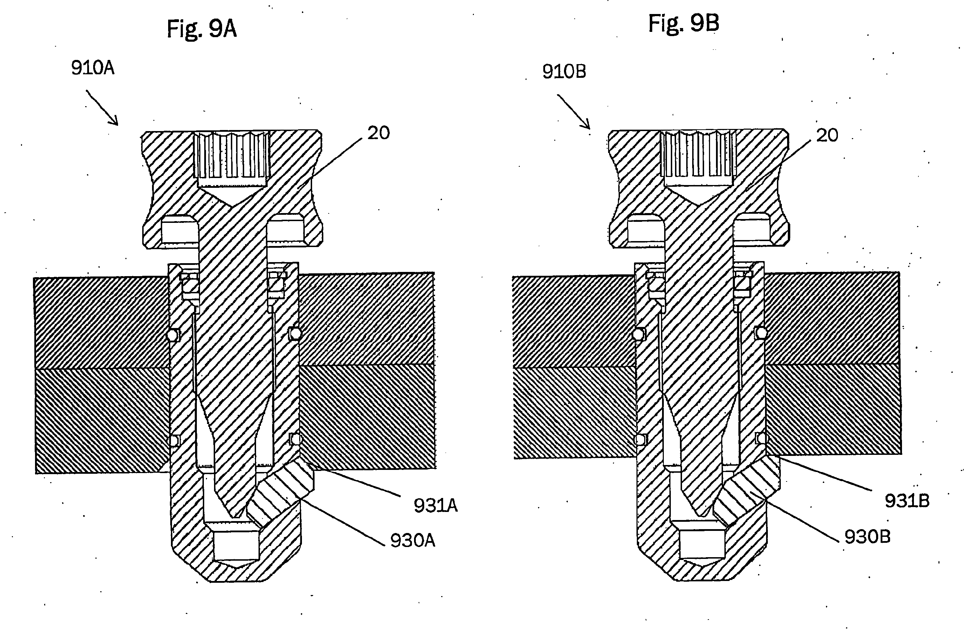

Die Figuren 9A - 11C zeigen weitere Ausführungsbeispiele des erfindungsgemäßen Spannbolzens. Die Figur 9A zeigt eine Schnittansicht eines Bolzens 910A, bei dem die Schiebeelemente 930A schräg im Bolzengehäuse gelagert sind. In dieser und in den nachfolgenden Figuren ist nur ein Schiebeelement dargestellt; die weiteren Schiebeelemente wurden jeweils zur Verdeutlichung des Konstruktionsprinzips weggelassen. Bei Hereindrehen der Spindel in das Bolzengehäuse werden die Schiebeelemente durch die Spindelspitze aus dem Bolzengehäuse heraus gedrückt. Der äußere Abschnitt des Schiebeelements weist die Stützfläche 931A in Form eines Mantelflächensegments eines Kegelstumpfes auf, um mit der angephasten Durchgangsbohrung einen flächigen Kontakt zu bilden. Der in Fig. 9B gezeigte Bolzen unterscheidet sich von dem Bolzen in Fig. 9A dadurch, dass der äußere Abschnitt des Schiebeelements 930B eine ringförmige Stützfläche 931B aufweist, damit der Bolzen bei einer nicht angephasten Durchgangsbohrung im gespannten Zustand einen flächigen Kontakt zu Gegenstück ausbilden kann.

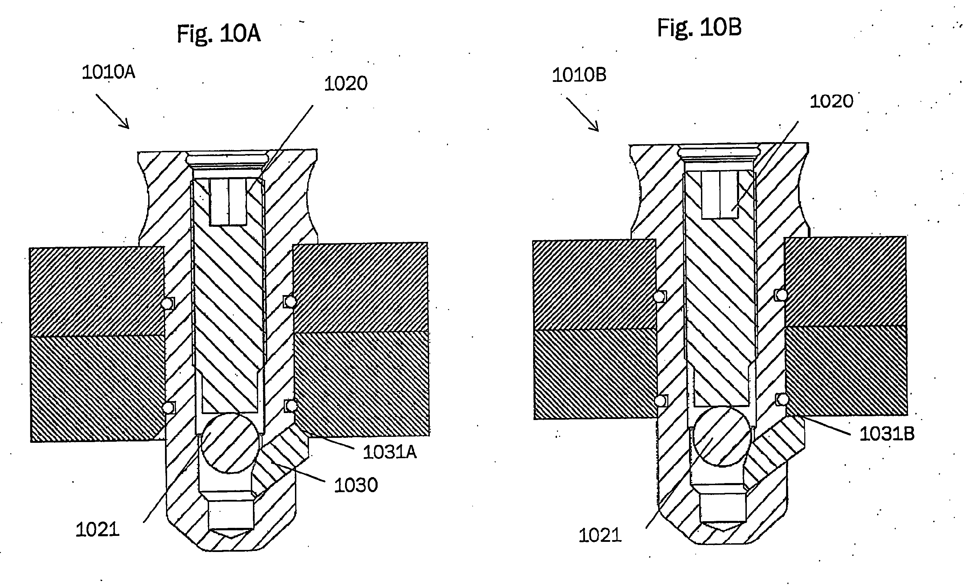

Bei dem in Fig. 10A illustrierten Ausführungsbeispiel ist das Spannmittel als im Bolzengehäuse befindliche Stiftschraube 1020 ausgebildet, die beispielsweise mittels eines Imbus-Schlüssels angezogen werden kann. Am Ende der Stiftschraube 1020 befindet sich eine Kugel 1021, die die Spannkraft der Stiftschraube auf die Schiebeelemente 1030A überträgt. Die Verwendung einer Kugel 1021 ermöglicht einen punktförmigen Kontakt zur Stiftschraube 1020 und zum Schiebeelement 1030A, wodurch vorteilhafterweise die auftretenden Reibungskräfte reduziert werden. Das in Fig. 10B gezeigte Ausführungsbeispiel unterscheidet sich wiederum von dem Bolzen in Fig. 10A durch die Ringfläche 1031B des Schiebeelements 1030B zur Verwendung bei nicht angephasten Durchgangsbohrungen, während der Bolzen in Fig. 10A eine Stützfläche 1031A in Form eines Mantelflächensegments eines Kegelstumpfes aufweist, um mit einer angephasten Durchgangsbohrung einen flächigen Kontakt zu bilden.

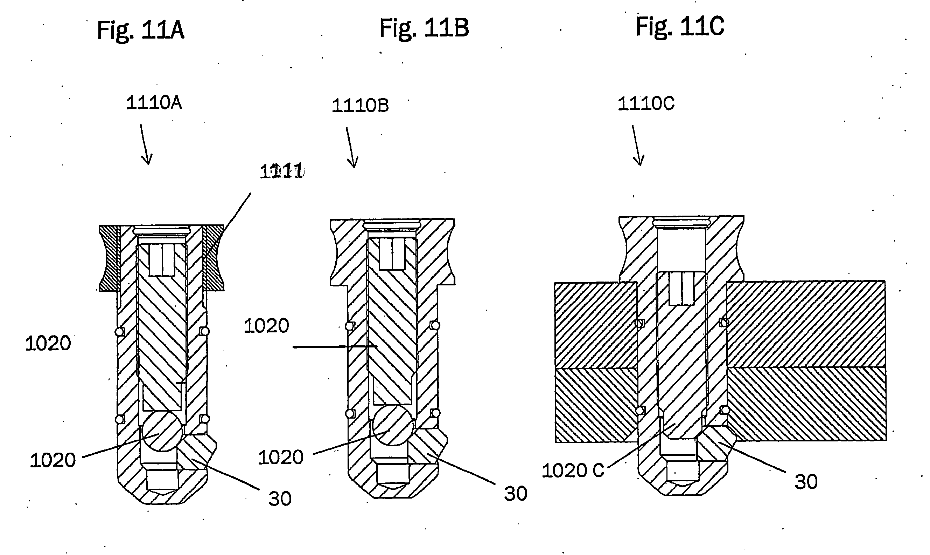

Der in Fig. 11A gezeigte Bolzen 1110A weist am Bolzenkopf ein zusätzliches Gewinde 1111 am Bolzengehäuse auf, um den Bolzen an verschiedene Plattenstärken anzupassen. Dies hat den Vorteil, dass Platten verschiedener Stärke gespannt werden können. Ähnlich wie der Bolzen in Fig. 10A ist das Spannmittel als eine im Bolzengehäuse befindliche Stiftschraube 1020 mit Kugel 1021 ausgebildet, mit dem Unterschied, das Schiebeelemente, wie in Fig. 1B beschrieben, verwendet werden. Der in Fig. 11B gezeigte Bolzen 1110B weist im Unterscheid zum Bolzen 1110A nicht das Gewinde 1111 auf. Der in Fig. 11C gezeigte Bolzen 1110C unterscheidet sich vom Bolzen 1110B dadurch, dass die Stiftschraube 1020C direkt am Schiebeelement 30 anliegt.

Hierbei bewegen sich die Schiebeelemente in einem Winkel von ca. 45° zur Längsachse des Bolzens aus dem Gehäuse heraus. wobei das Klemmmittel als zumindest ein im Bolzengehäuse verdrehsicher gelagertes Schiebeelement (30) ausgebildet ist und der äußere Abschnitt des Schiebeelements (30) eine Stützfläche (31) in Form eines Mantelflächensegments eines Kegelstumpfes oder eine ringförmige Stützfläche aufweist.

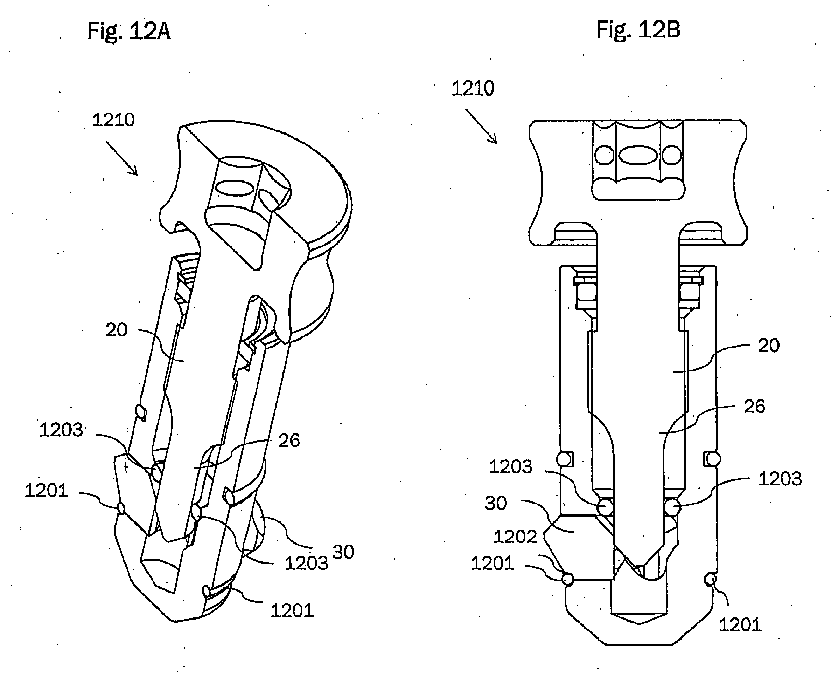

Ein weiteres vorteilhaftes Ausführungsbeispiel des Bolzens ist in den Schnittansichten der Figuren 12A und 12B gezeigt. Der gezeigte Bolzen weist einen zusätzlichen Sprengring 1201 zur Sicherung des Schiebeelements 30 auf. Hierzu weist das Schiebeelement eine Umlaufkante 1202 auf. Beim Spannen des Bolzen kann ein Schiebeelement 30 maximal bis zur der Position aus der Durchtrittsöffnung heraustreten, bei der die Umlaufkante 1202 des Schiebeelements am Sprengring 1201 anliegt. Somit sichert der Sprengring die Schiebeelemente vor dem Herausfallen aus der Durchtrittsöffnung.

Damit kann ein Anstauchen oder Prägung des Bolzengehäuses 11 am unteren Bereich der Durchtrittsöffnungen für die Schiebeelemente 30 verhindert werden. Die erleichtert die Herstellung einer zuverlässigen Sicherung der Schiebeelemente 30, da ein Anstauchen des Gehäuses bei auftretenden Fertigungstoleranzen zu höherem Ausschuss bei der Herstellung führen kann,

Der Sprengring 1201 ermöglicht weiterhin ein Reinigen des Bolzens, falls dieser im Innern durch Ruß oder andere Partikel verschmutzt ist und die Bewegung der Schiebeelemente beeinträchtigen könnte. Hierzu kann der Sprengring 1201 entfernt werden, um die Schiebeelemente aus dem Bolzen 1210 zu entnehmen und die Durchtrittsöffnungen zur Aufnahme der Schiebeelemente 30 zu reinigen. Dies ist in dem Ausführungsbeispiel der gestauchten Durchtrittsöffnung nicht möglich. Ein weiterer O-Ring 1203 im Inneren des Bolzens 1210, der die sich verjüngende Spitze 26 der Spindel umgibt, verhindert dabei, dass Schmutz aus der Durchtrittsöffnung der Schiebeelemente 30 in den oberen Teil des Bolzens gelangen kann.

## Patentansprüche

1. Bolzen (10) zum lösbaren Verbinden zweier mit wenigstens einer Durchgangsbohrung versehener Bauteile (40, 43), mit
einem Bolzengehäuse (11) mit Durchtrittsöffnungen für Klemmmittel; einem Klemmmittel, das in den Durchtrittsöffnungen des Bolzengehäuses (11) gelagert ist; und
ein im Inneren des Bolzengehäuses (11) angeordnetes mit Außengewinde (24) versehenes Spannmittel (20), dessen Außengewinde (24) in ein Innengewinde (12) des Bolzengehäuses (11) eingreift und welches beim Spannen das Klemmmittel aus dem Bolzengehäuse (11) drückt, so dass ein äußerer Abschnitt des Klemmmittels aus den Durchtrittsöffnungen heraustritt, **dadurch gekennzeichnet dass**
das Klemmmittel als zumindest ein im Bolzengehäuse (11) verdrehsicher gelagertes Schiebeelement (30) ausgebildet ist und der äuβere Abschnitt des Schiebeelements (30) eine Stützfläche (31) in Form eines Mantelflächensegments eines Kegelstumpfes oder eine ringförmige Stützfläche aufweist.

2. Bolzen nach Anspruch 1, **dadurch gekennzeichnet, dass** die Stützfläche (31) derart geformt ist, um mit einem zu spannenden Gegenstück einen flächigen Formschluss zu bilden.

3. Bolzen nach Anspruch 1 oder 2, **dadurch gekennzeichnet, dass** das zumindest eine Schiebeelement (30) einen polygonförmigen Querschnitt aufweist.

4. Bolzen nach einem der voranstehenden Ansprüche 1 bis 3, wobei die Schiebeelemente (30) mit Spiel in den Durchtrittsöffnungen gelagert sind, wobei eine Krafteinleitung über die Stützfläche (31) eine Verspannung des Schiebeelements (30) bewirkt.

5. Bolzen nach einem der voranstehenden Ansprüche 1 bis 4, **dadurch gekennzeichnet, dass** das Spannmittel eine Spindel (20) mit einem sich verjüngenden Endbereich (25) ist, wobei beim Hereindrehen der Spindel (20) der sich verjüngende Endbereich (25) die Schiebeelemente (30) aus dem Bolzengehäuse (11) herausdrückt.

6. Bolzen nach einem der voranstehenden Ansprüche 1 bis 5, **dadurch gekennzeichnet, dass** eine Kugel (1021) im Innern des Bolzengehäuses (11) gelagert ist, wobei die Spannkraft des Spannmittels über die Kugel auf die Schiebeelemente (30) übertragen wird.

7. Bolzen nach einem der voranstehenden Ansprüche, **dadurch gekennzeichnet, dass** der Bolzen (10) drei Schiebeelemente (30) umfasst, die konzentrisch im Abstand von ca. 120° in drei Bohrungen gelagert sind.

8. Bolzen nach einem der voranstehenden Ansprüche, **dadurch gekennzeichnet, dass** ein erster Endbereich (21) des Spannmittels aus dem Bolzengehäuse herausragt und das Bolzengehäuse (11) an seinem Ende, an dem der erste Endbereich der Spindel (20) aus dem Bolzengehäuse (11) herausragt, eine Umlaufkante (15) aufweist.

9. Bolzen nach einem der voranstehenden Ansprüche, **dadurch gekennzeichnet, dass** das Bolzengehäuse (11) in seinem oberen als auch seinem unteren Abschnitt jeweils eine Umfangsnut aufweist, in der ein Gummiring oder Stahlsprengring (13, 14) eingelegt ist.

10. Spannsystem zum lösbaren Verbinden zweier Bauteile mit einem Bolzen; mit
einem Bolzen (10) gemäß der Ansprüche 1-9;
einer Gewindestange (46);
einem ersten (40) und einem zweiten (43) Bauteil, die jeweils mindestens eine kreis- oder langlochförmige genormte Durchgangsöffnung aufweisen, in die ein genormtes Innengewinde (44) eingearbeitet ist,
wobei die beiden Bauteile sowohl durch Einstecken des Bolzens (10) in die Durchgangsöffnungen der Bauteile und anschließendes Spannen des Bolzens verbindbar sind als auch durch Eindrehen der Gewindestange (46) in die Durchgangsöffnungen.

11. Spannsystem nach Anspruch 10, weiter umfassend mindestens eine Adaptergewindebuchse (45) zum Verkleinern des Gewindedurchmessers, die in das Innengewinde (44) der Durchgangsöffnung der Bauteile einschraubbar ist.

## Claims

1. A bolt (10) for detachably connecting two components (40, 43) provided with at least one through-hole, comprising
a bolt housing (11) having feed-through openings for clamping means;
a clamping means journalled in said feed-through openings of said bolt housing (11); and
a tightening means (20) provided with an external thread (24) and arranged in the interior of said bolt housing (11), the external thread (24) of which engages with an internal thread (12) of said bolt housing (11) and which, when tightened, presses said clamping means out of the bolt housing (11) such that an outer portion of said clamping means protrudes from said feed-through openings,
**characterized in that**
said clamping means is formed as at least one pushing element (30) rotationally fixedly journalled in said bolt housing (11) and said outer portion of said pushing element (30) comprises a supporting surface (31) in the shape of lateral area segment of a truncated cone or an annular supporting surface.

2. The bolt according to claim 1, **characterized in that** said supporting surface (31) is formed such that it forms a flat positive engagement with a counter part to be tightened.

3. The bolt according to claim 1 or 2, **characterized in that** said at least one pushing element (30) comprises a polygonal cross section.

4. The bolt according to one of the preceding claims 1 to 3, wherein said pushing elements (30) are journalled in said feed-through openings with a clearance, wherein leading-in a force via said supporting surface (31) causes a distortion of said pushing element (30).

5. The bolt according to one of the preceding claims 1 to 4, **characterized in that** said tightening means is a spindle (20) having a tapered end portion (25), wherein during turning in said spindle (20) said tapered end portion (25) presses said pushing elements (30) out of said bolt housing (11).

6. The bolt according to one of the preceding claims 1 to 5, **characterized in that** a ball (1021) is journalled in the interior of said bolt housing (11), wherein the tightening force of said tightening means is transferred via said ball onto said pushing elements (30).

7. The bolt according to one of the preceding claims, **characterized in that** said bolt (10) comprises three pushing elements (30) which are journalled concentrically in three bores having a mutual distance of about 120°.

8. The bolt according to one of the preceding claims, **characterized in that** a first end portion (21) of said tightening means protrudes from said bolt housing and said bolt housing (11) comprises a peripheral rim (15) at an end thereof at which said first end portion of said spindle (20) protrudes from said bolt housing (11)..

9. The bolt according to one of the preceding claims, **characterized in that** said bolt housing (11) comprises both in its upper portion and in its lower portion a peripheral groove in which a rubber ring or a steel snap ring (13, 14) is inserted.

10. A tightening system for detachably connecting two components by a bolt, comprising
a bolt (10) according to one of the claims of 1-9;
a threaded bar (46);
a first (40) and a second (43) component which respectively comprise at least one standardized feed-through opening in the shape of an annular ring or an elongated hole in which a standardized internal thread (44) is incorporated,
wherein both said components are connectable both by inserting said bolt (10) into sad feed-through openings of said components followed by tightening said bolt and by turning in said threaded bar (46) into said feed-through openings.

11. The tightening system according to claim 10, further comprising at least one threaded adapter sleeve (45) for reducing the thread diameter which is threadable into said internal thread (44) of said feed-through opening of said components.

## Revendications

1. Boulon (10) pour la liaison amovible de deux pièces (40, 43) pourvues d'au moins un perçage traversant, comportant
un boîtier de boulon (11) pourvu d'ouvertures de passage pour des moyens de coincement;
un moyen de coincement qui est monté dans les ouvertures de passage du boîtier de boulon (11) ; et
un moyen de serrage (20) agencé à l'intérieur du boîtier de boulon (11) et pourvu d'un filetage extérieur (24), dont le filetage extérieur (24) vient s'engager dans un taraudage intérieur (12) du boîtier de boulon (11) et qui, lors du serrage, vient pousser le moyen de coincement hors du boîtier de boulon (11), de telle sorte qu'un tronçon extérieur du moyen de coincement sort hors des ouvertures de passage,
**caractérisé en ce que** le moyen de coincement est réalisé sous la forme d'au moins un élément coulissant (30) monté solidairement en rotation dans le boîtier de boulon (11), et le tronçon extérieur de l'élément coulissant (30) présente une surface d'appui (31) sous la forme d'un segment de surface latérale d'un tronc conique ou une surface d'appui annulaire.

2. Boulon selon la revendication 1, **caractérisé en ce que** la surface d'appui (31) est formée de manière à venir en coopération de forme surfacique avec une pièce complémentaire à serrer.

3. Boulon selon la revendication 1 ou 2, **caractérisé en ce que** ledit au moins un élément coulissant (30) présente une section transversale de forme polygonale.

4. Boulon selon l'une des revendications 1 à 3, dans lequel les éléments coulissants (30) sont montés avec jeu dans les ouvertures de passage, l'application d'une force par la surface d'appui (31) procurant un serrage de l'élément coulissant (30).

5. Boulon selon l'une des revendications 1 à 4, **caractérisé en ce que** le moyen de serrage est une broche (20) dont une zone d'extrémité (25) va en se rétrécissant, et lors de l'engagement de la broche (20) la zone d'extrémité (25) qui va en se rétrécissant vient pousser les éléments coulissants (30) hors du boîtier de boulon (11).

6. Boulon selon l'une des revendications 1 à 5, **caractérisé en ce qu'**une bille (1021) est montée à l'intérieur du boîtier de boulon (11), la force de serrage du moyen de serrage étant transmise par la bille jusqu'aux éléments coulissants (30).

7. Boulon selon l'une des revendications précédentes, **caractérisé en ce que** le boulon (10) comprend trois éléments coulissants (30) qui sont montés concentriquement à une distance d'environ 120° dans les trois perçages.

8. Boulon selon l'une des revendications précédentes, **caractérisé en ce qu'**une première zone d'extrémité (21) du moyen de serrage dépasse hors du boîtier de boulon, et le boîtier de boulon (11) présente une arête périphérique (15) à son extrémité à laquelle la première zone d'extrémité de la broche (20) dépasse hors du boîtier de boulon (11).

9. Boulon selon l'une des revendications précédentes, **caractérisé en ce que** le boîtier de boulon (11) présente une gorge périphérique respective aussi bien dans son tronçon supérieur que dans son tronçon inférieur, gorge dans laquelle est posé un anneau en caoutchouc ou un circlip en acier (13, 14).

10. Système de serrage pour la liaison amovible de deux pièces avec un boulon; comportant
un boulon (10) selon les revendications 1 à 9 ;
une tige filetée (46) ;
une première (40) et une seconde pièce (43) qui présentent chacune au moins une ouverture de passage normalisée de forme circulaire ou oblongue dans laquelle est ménagé un taraudage intérieur normalisé (44), les deux pièces étant susceptibles d'être reliées l'une à l'autre aussi bien par insertion du boulon (10) dans les ouvertures de passage des pièces puis par serrage des boulons, que par vissage de la tige filetée (46) dans les ouvertures de passage.

11. Système de serrage selon la revendication 10, comprenant en outre une douille filetée d'adaptation (45) pour réduire le diamètre du taraudage, susceptible d'être vissée dans le taraudage (44) de l'ouverture de passage des pièces.
